# EUROPEAN PATENT APPLICATION

(11) **EP 4 811 876 A1**
(43) Date of publication of application: **23.09.2026**
(21) Application number: 24902397.9
(22) Date of filing: 29.10.2024
(51) Int. Cl.: H04W 52/02

(54) **DOWNLINK CONTROL INFORMATION DETECTION METHOD AND DEVICE**

(30) Priority: 15.12.2023 CN 202311732886
(71) Applicant: Huawei Technologies Co., Ltd., Shenzhen, Guangdong 518129 (CN)
(72) Inventor: FU, Jinshu, Shenzhen, Guangdong 518129 (CN); WEI, Dongdong, Shenzhen, Guangdong 518129 (CN); TANG, Hao, Shenzhen, Guangdong 518129 (CN)
(74) Representative: Pfenning, Meinig & Partner mbB
(86) International application number: PCT/CN2024/128278
(87) International publication number: WO 2025/123973

(57) **Abstract**

This application provides a downlink control information detection method and an apparatus, so as to reduce power consumption of blind detection for downlink control information, and relates to the field of wireless communication technologies. In the method, a first communication apparatus includes a first module and a second module. Power consumption of the first module is lower than power consumption of the second module. The first communication apparatus receives first information. The first information indicates a blind detection mode for the downlink control information. The blind detection mode includes performing blind detection for the downlink control information by using the first module or performing blind detection for the downlink control information by using the second module. The first communication apparatus detects the downlink control information based on the blind detection mode. With this solution, a terminal device may perform, based on the blind detection mode indicated by a network device, blind detection for the downlink control information by using the first module or perform blind detection for the downlink control information by using the second module. In comparison with a related technology in which a first module wakes up a second module to perform blind detection for the downlink control information, this solution can reduce a quantity of times of waking up the second module and also avoid frequently waking up the second module, thereby saving energy.

## Description

### CROSS-REFERENCE TO RELATED APPLICATIONS

This application claims priority to Chinese Patent Application No. 202311732886.4, filed with the China National Intellectual Property Administration on December 15, 2023 and entitled "DOWNLINK CONTROL INFORMATION DETECTION METHOD AND APPARATUS", which is incorporated herein by reference in its entirety.

### TECHNICAL FIELD

This application relates to the field of wireless communication technologies, and in particular, to a downlink control information detection method and an apparatus.

### BACKGROUND

For a terminal in a connected state, physical downlink control channel (physical downlink control channel, PDCCH) blind detection is a necessary process for the terminal to obtain uplink and downlink scheduling. Because there is no way to obtain the configured time-frequency domain resource position before PDCCH blind detection, the terminal needs to perform blind detection across several preset control resource sets (CORESETs) according to predefined rules, resulting in a large quantity of PDCCH blind detections and a high proportion of power consumption in overall power consumption of the terminal. Therefore, in evolution of cellular networks, optimization design has been continuously performed for terminal PDCCH blind detection.

### SUMMARY

This application provides a downlink control information detection method and an apparatus, to reduce power consumption of blind detection for downlink control information.

According to a first aspect, a downlink control information detection method is provided. The method may be performed by a first communication apparatus or a chip/chip system. The first communication apparatus may be a network device or a terminal device. In the method, the first communication apparatus includes a first module and a second module. Power consumption of the first module is lower than power consumption of the second module. The first communication apparatus receives first information. The first information indicates a blind detection mode for downlink control information. The blind detection mode includes performing blind detection for the downlink control information by using the first module or performing blind detection for the downlink control information by using the second module. The first communication apparatus detects the downlink control information based on the blind detection mode.

Based on this solution, the network device may indicate the blind detection mode for the downlink control information to the terminal device, and the terminal device may perform, based on the indication of the blind detection mode, the blind detection for the downlink control information based on the first module or perform the blind detection for the downlink control information based on the second module. In comparison with a related technology in which the first module wakes up the second module to perform blind detection for the downlink control information, this solution can reduce a quantity of times of waking up the second module and also avoid frequently waking up the second module, thereby saving energy.

In a possible implementation, the first information is carried in a low-power wake-up signal, or the first information is carried in radio resource control signaling. Based on the foregoing solution, the low-power wake-up signal or the radio resource control signaling may indicate the blind detection mode for the downlink control information. The blind detection mode indicated in the low-power wake-up signal may be received by the first module. Therefore, power consumption of the terminal device may be further reduced.

In a possible implementation, the first information indicates to perform the blind detection for the downlink control information by using the second module. The first information further includes a first condition, and the first condition is used to switch from the blind detection for the downlink control information by using the second module to the blind detection for the downlink control information based on the first module. Based on this solution, the first condition controls switching of the blind detection mode, so that power consumption caused by the blind detection for the downlink control information performed by the second module for a long time can be avoided.

In a possible implementation, the downlink control information includes second information and third information. The first information indicates a blind detection mode for the second information. The second information and the third information do not overlap. The first communication apparatus detects the second information based on the blind detection mode.

Based on this solution, the downlink control information may be multi-stage downlink control information, and the first information may indicate a blind detection mode for first-stage downlink control information. The multi-stage downlink control information can reduce a decoding latency of the downlink control information.

In a possible implementation, the second information further includes one or more of the following: a time-frequency resource of the third information or a modulation and coding scheme of the third information.

Based on this solution, a time-frequency resource or a modulation and coding scheme of next-stage downlink control information is indicated by using the first-stage downlink control information, so that flexibility can be improved in comparison with configuration via radio resource control signaling.

In a possible implementation, the second information is carried on a first downlink control channel, and the third information is carried on a second downlink control channel. Alternatively, the second information is carried on a downlink control channel, and the third information is carried on a downlink data channel.

Based on this solution, the third information and the second information may be carried on different downlink control channels, or the second information may be carried on the downlink control channel and the third information is carried on the downlink data channel.

In a possible implementation, when the first information indicates that the downlink control information exists, the first communication apparatus detects the downlink control information based on the blind detection mode.

In a possible implementation, the first information further indicates that the downlink control information schedules uplink transmission and/or the downlink control information schedules downlink transmission. Based on this solution, the first information may indicate that the downlink control information is downlink scheduling control information or uplink scheduling control information.

In a possible implementation, the first information further indicates first duration, and the first duration is duration that needs to be skipped during detection of the downlink control information. Based on this solution, the first information may indicate the first duration. In other words, downlink control information skipping can be supported, to increase a blind detection period and reduce the power consumption of the terminal device.

In a possible implementation, the first information further indicates whether the downlink control information is cross-carrier scheduling downlink control information.

In a possible implementation, the first information further indicates an aggregation level or an aggregation level group. The aggregation level group includes one or more aggregation levels. The downlink control information is detected at a detection position corresponding to the aggregation level or at a detection position corresponding to the aggregation level group.

In a possible implementation, the first information further indicates an aggregation level and a target detection position, and the target detection position is a part or all of a detection position corresponding to the aggregation level indicated by the first information. The downlink control information is detected at the target detection position based on the blind detection mode.

Based on the foregoing solution, the first information may indicate information such as an aggregation level or an aggregation level group, so that a detection position for blind detection can be determined during blind detection, thereby further reducing the power consumption of the terminal device.

According to a second aspect, a downlink control information detection method is provided. The method may be performed by a second communication apparatus or a chip/chip system. The second communication apparatus may be a network device or a terminal device. The second communication apparatus determines first information. The first information indicates a blind detection mode for downlink control information. The blind detection mode includes performing blind detection for the downlink control information by using a first module of a communication apparatus or performing blind detection for the downlink control information by using a second module of the communication apparatus. The second communication apparatus sends the first information to the communication apparatus.

In a possible implementation, the first information is carried in a low-power wake-up signal, or the first information is carried in radio resource control signaling.

In a possible implementation, the first information further includes a first condition, and the first condition indicates to switch from the blind detection for the downlink control information by using the second module to the blind detection for the downlink control information based on the first module.

In a possible implementation, the downlink control information includes second information and third information. The first information indicates a blind detection mode for the second information. The second information and the third information do not overlap. The first information indicates the blind detection mode for the second information.

In a possible implementation, the second information further includes one or more of the following: a time-frequency resource of the third information or a modulation and coding scheme of the third information.

In a possible implementation, the second information is carried on a first downlink control channel, and the third information is carried on a second downlink control channel. Alternatively, the second information is carried on a downlink control channel, and the third information is carried on a downlink data channel.

In a possible implementation, the first information further indicates whether the downlink control information exists.

In a possible implementation, the first information further indicates that the downlink control information schedules uplink transmission and/or the downlink control information schedules downlink transmission.

In a possible implementation, the first information further indicates first duration, and the first duration is duration that needs to be skipped during detection of the downlink control information.

In a possible implementation, the first information further indicates whether the downlink control information is cross-carrier scheduling downlink control information.

In a possible implementation, the first information further indicates an aggregation level or an aggregation level group. The aggregation level group includes one or more aggregation levels, and the aggregation level corresponds to a detection position of the downlink control information, or the aggregation level group corresponds to a detection position of the downlink control information.

In a possible implementation, the first information further indicates an aggregation level and a target detection position, and the target detection position is a part or all of a detection position corresponding to the aggregation level indicated by the first information.

According to a third aspect, a communication apparatus is provided, including a processing unit and a transceiver unit. The transceiver unit is configured to receive first information. The first information indicates a blind detection mode for downlink control information, and the blind detection mode includes performing blind detection for the downlink control information by using a first module included in the communication apparatus or performing blind detection for the downlink control information by using a second module included in the communication apparatus. The processing unit is configured to activate, based on the blind detection mode, the first module or the second module to detect the downlink control information.

In a possible implementation, the first information is carried in a low-power wake-up signal, or the first information is carried in radio resource control signaling.

In a possible implementation, the first information indicates to perform the blind detection for the downlink control information by using the second module. The first information further includes a first condition, and the first condition is used to switch from the blind detection for the downlink control information by using the second module to the blind detection for the downlink control information based on the first module.

In a possible implementation, the downlink control information includes second information and third information. The first information indicates a blind detection mode for the second information. The second information and the third information do not overlap. The processing unit is specifically configured to detect the second information based on the blind detection mode.

In a possible implementation, the second information further includes one or more of the following: a time-frequency resource of the third information or a modulation and coding scheme of the third information.

In a possible implementation, the second information is carried on a first downlink control channel, and the third information is carried on a second downlink control channel. Alternatively, the second information is carried on a downlink control channel, and the third information is carried on a downlink data channel.

In a possible implementation, when the first information indicates that the downlink control information exists, the processing unit is specifically configured to detect the downlink control information based on the blind detection mode.

In a possible implementation, the first information further indicates that the downlink control information schedules uplink transmission and/or the downlink control information schedules downlink transmission.

In a possible implementation, the first information further indicates first duration, and the first duration is duration that needs to be skipped during detection of the downlink control information.

In a possible implementation, the first information further indicates whether the downlink control information is cross-carrier scheduling downlink control information.

In a possible implementation, the first information further indicates an aggregation level or an aggregation level group. The aggregation level group includes one or more aggregation levels. The processing unit is specifically configured to detect the downlink control information at a detection position corresponding to the aggregation level or at a detection position corresponding to the aggregation level group.

In a possible implementation, the first information further indicates an aggregation level and a target detection position, and the target detection position is a part or all of a detection position corresponding to the aggregation level indicated by the first information. The processing unit is specifically configured to detect the downlink control information at the target detection position based on the blind detection mode.

According to a fourth aspect, a communication apparatus is provided, including a processing unit and a transceiver unit. The processing unit is configured to determine first information. The first information indicates a blind detection mode for downlink control information, and the blind detection mode includes performing blind detection for the downlink control information by using a first module of the communication apparatus or performing blind detection for the downlink control information by using a second module of the communication apparatus. The transceiver unit is configured to send the first information to the communication apparatus.

In a possible implementation, the first information is carried in a low-power wake-up signal, or the first information is carried in radio resource control signaling.

In a possible implementation, the first information further includes a first condition, and the first condition indicates to switch from the blind detection for the downlink control information by using the second module to the blind detection for the downlink control information based on the first module.

In a possible implementation, the downlink control information includes second information and third information. The first information indicates a blind detection mode for the second information. The second information and the third information do not overlap. The first information indicates the blind detection mode for the second information.

In a possible implementation, the second information further includes one or more of the following: a time-frequency resource of the third information or a modulation and coding scheme of the third information.

In a possible implementation, the second information is carried on a first downlink control channel, and the third information is carried on a second downlink control channel. Alternatively, the second information is carried on a downlink control channel, and the third information is carried on a downlink data channel.

In a possible implementation, the first information further indicates whether the downlink control information exists.

In a possible implementation, the first information further indicates that the downlink control information schedules uplink transmission and/or the downlink control information schedules downlink transmission.

In a possible implementation, the first information further indicates first duration, and the first duration is duration that needs to be skipped during detection of the downlink control information.

In a possible implementation, the first information further indicates whether the downlink control information is cross-carrier scheduling downlink control information.

In a possible implementation, the first information further indicates an aggregation level or an aggregation level group. The aggregation level group includes one or more aggregation levels, and the aggregation level corresponds to a detection position of the downlink control information, or the aggregation level group corresponds to a detection position of the downlink control information.

In a possible implementation, the first information further indicates an aggregation level and a target detection position, and the target detection position is a part or all of a detection position corresponding to the aggregation level indicated by the first information.

According to a fifth aspect, this application provides a communication apparatus, including a processor. The processor is coupled to a memory. The memory is configured to store a computer program or instructions. The processor is configured to execute the computer program or the instructions, to perform the implementation methods in the first aspect and the second aspect. The memory may be located inside or outside the apparatus. There are one or more processors.

According to a sixth aspect, this application provides a communication apparatus, including a processor and an interface circuit. The interface circuit is configured to communicate with another apparatus, and the processor is configured to perform the implementation methods in the first aspect and the second aspect.

According to a seventh aspect, a communication apparatus is provided. The apparatus includes a logic circuit and an input/output interface.

According to an eighth aspect, this application provides a communication system, including a first communication apparatus and a second communication apparatus that are configured to perform the implementation methods in the first aspect and the second aspect.

According to a ninth aspect, this application further provides a chip system, including a processor configured to perform the implementation methods in the first aspect and the second aspect.

According to a tenth aspect, this application further provides a computer program product, including computer-executable instructions. When the computer-executable instructions are run on a computer, the implementation methods in the first aspect and the second aspect are performed.

According to an eleventh aspect, this application further provides a computer-readable storage medium. The computer-readable storage medium stores a computer program or instructions. When the instructions are run on a computer, the implementation methods in the first aspect and the second aspect are implemented.

For technical effects achieved in the second aspect to the eleventh aspect, refer to the technical effects in the first aspect. Details are not described herein again.

### BRIEF DESCRIPTION OF DRAWINGS

FIG. 1 is a diagram of a communication system according to an embodiment of this application;
FIG. 2 is a block diagram of a terminal according to an embodiment of this application;
FIG. 3A is a diagram of a WUS indicating whether to detect a PDCCH;
FIG. 3B is a diagram in which an SCell does not monitor a PDCCH;
FIG. 3C is a diagram of PDCCH skipping (skipping);
FIG. 3D is a diagram of a search space;
FIG. 4 is an example flowchart of a downlink control information detection method according to an embodiment of this application;
FIG. 5A is a diagram of two-stage DCI according to an embodiment of this application;
FIG. 5B(a), FIG. 5B(b), and FIG. 5B(c) are a diagram of another two-stage DCI according to an embodiment of this application;
FIG. 6 is a diagram of DCI skipping according to an embodiment of this application;
FIG. 7 is a diagram of a communication apparatus according to an embodiment of this application;
FIG. 8 is a diagram of another communication apparatus according to an embodiment of this application;
FIG. 9 is a diagram of another communication apparatus according to an embodiment of this application; and
FIG. 10 is a diagram of another communication apparatus according to an embodiment of this application.

### DESCRIPTION OF EMBODIMENTS

For ease of understanding the technical solutions provided in embodiments of this application, the following explains and describes technical terms in embodiments of this application.
(1) A low-power wake-up signal (low-power wake-up signal, LP-WUS) is used in a plurality of low-power communication protocols such as long range radio (long range radio, LoRa), Bluetooth (Bluetooth), or wireless network transmission technologies (wireless fidelity, Wi-Fi). The LP-WUS allows for a design and implementation of a low-power receiver. This helps reduce power consumption of a device. The LP-WUS is very similar to a WUS. The WUS is delivered based on a conventional Zadoff-Chu (Zadoff-Chu, ZC) sequence and downlink control information (downlink control information, DCI) in a 2-6 format (format) in a physical downlink control channel (physical downlink control channel, PDCCH). If a WUS is detected, a terminal device continues to decode a paging message; otherwise, the terminal device returns to a sleep state and waits for a next time to receive the WUS.

The technical solutions in embodiments of this application may be applied to a new radio (New Radio, NR) system, a long term evolution (Long Term Evolution, LTE) system, an LTE frequency division duplex (Frequency Division Duplex, FDD) system, an LTE time division duplex (Time Division Duplex, TDD) system, a worldwide interoperability for microwave access (Worldwide Interoperability for Microwave Access, WiMAX) communication system, a 5^{th} generation (5^{th} generation, 5G) communication system, a next-generation wireless communication system such as a 6G system, or the like. This is not limited herein.

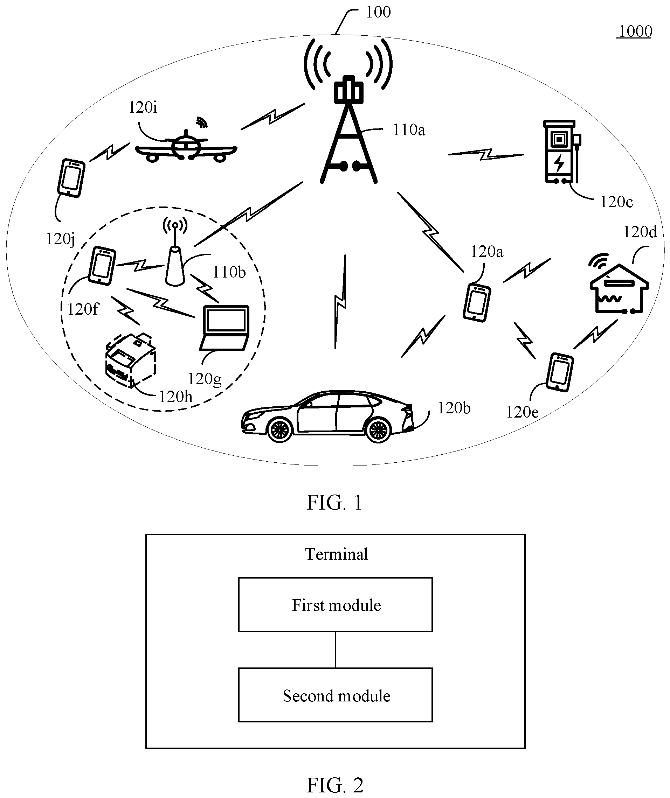

FIG. 1 is a diagram of an architecture of a communication system 1000 to which embodiments of this application are applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to a core network device in a wireless or wired manner. Terminal apparatuses may be connected to each other in a wired or wireless manner, and network devices may be connected to each other in a wired or wireless manner. FIG. 1 is merely a diagram. The communication system may further include another network device, for example, may further include a wireless relay device and a wireless backhaul device that are not shown in FIG. 1.

The network device is a network side device having a wireless transceiver function. The network device may be an apparatus that is in a radio access network (radio access network, RAN) and that provides a wireless communication function for a terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of a part or all of a physical layer. For specific descriptions of the foregoing protocol layers, refer to related technical specifications of the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In another possible scenario, a plurality of RAN nodes coordinate to assist a terminal in implementing radio access, and different RAN nodes respectively implement some functions of the base station. For example, the RAN node may be a CU, a DU, a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of a software module and a hardware module.

The terminal device is a user-side device having a wireless transceiver function. The terminal device may also be referred to as user equipment (user equipment, UE), a mobile station, a mobile terminal, or the like. The terminal apparatus may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, remote medical, smart grid, smart furniture, smart office, smart wearable, smart transportation, and smart city. The terminal apparatus may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific apparatus form that are used by the terminal apparatus are not limited in embodiments of this application.

The network device and the terminal device may be at fixed positions, or may be movable. The network device and the terminal device may be deployed on land, including an indoor device, an outdoor device, a handheld device, or a vehicle-mounted device; may be deployed on the water surface; or may be deployed on a plane, a balloon, and an artificial satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device. In other words, 110a and 120i communicate with each other by using a wireless air interface protocol. Certainly, 110a and 120i may alternatively communicate with each other by using an interface protocol between network devices. In this case, for 110a, 120i is also a network device. Therefore, both the network device and the terminal device may be collectively referred to as communication apparatuses. 110a and 110b in FIG. 1 may be referred to as communication apparatuses having a function of the network device, and 120a to 120j in FIG. 1 may be referred to as communication apparatuses having a function of the terminal device.

In embodiments of this application, the function of the network device may alternatively be performed by a module (for example, a chip) in the network device, or may be performed by a control subsystem including the function of the network device. The control subsystem herein including the function of the network device may be a control center in the foregoing application scenarios such as smart grid, industrial control, smart transportation, and smart city. The function of the terminal device may alternatively be performed by a module (for example, a chip or a modem) in the terminal device, or may be performed by an apparatus including the function of the terminal device. The following describes an example in which the function of the terminal device is performed by a terminal and the function of the network device is performed by a base station.

With development of 5G technologies, a 5G network has an increasingly high requirement for a capability of a terminal. As the requirement for the capability of the terminal increases, hardware of the terminal increases accordingly, and power consumption of the terminal inevitably increases. In comparison with an LTE terminal, a 5G terminal supports a maximum power of 29 dBm. For typical services such as comprehensive web browsing, instant messaging, gaming, or video, communication power consumption of the 5G terminal increases by more than 200% on average compared with that of the LTE terminal. A battery endurance capacity of the terminal is an important aspect of user experience and affects applicability of the 5G terminal or a service. Therefore, a battery endurance capacity of the 5G terminal faces a great challenge, and research on how to reduce power consumption of the 5G terminal is key to resolving this problem.

Refer to FIG. 2. A terminal may include a low-power wake-up radio (low power wake up radio, LR) and a main radio (main radio, MR). It may be understood that the LR and the MR may be integrated into a same processor (chip) as logical functional modules, or the LR and the MR may separately serve as independent processors (chips). Power consumption of the LR is lower than power consumption of the MR. In another example, a bandwidth of the LR is also lower than a bandwidth of the MR. It should be noted that the MR and the LR are merely used as examples of names. The LR may also be referred to as a secondary module, and the MR may also be referred to as a main module. This is not specifically limited in this application. In this embodiment of this application, an example in which the LR is a first module and the MR is a second module is used for description.

For a terminal in a connected state, physical downlink control channel (physical downlink control channel, PDCCH) blind detection is a necessary process for the terminal to obtain uplink and downlink scheduling. Because there is no way to obtain the configured time-frequency domain resource position before PDCCH blind detection, the terminal needs to perform blind detection across several preset control resource sets (CORESETs) according to predefined rules, resulting in a large quantity of PDCCH blind detections and a high proportion of power consumption in overall power consumption of the terminal. Therefore, in evolution of cellular networks, optimization design has been continuously performed for the terminal PDCCH blind detection.

In R15, a PDCCH monitoring occasion (monitoring occasion) is designed. In remaining minimum system information (remaining minimum system information, RMSI) - PDCCH-Config (Config), high-order 4 bits indicate a common search space, and low-order 4 bits indicate the PDCCH monitoring occasion, to reduce PDCCH indication overheads. In addition, after a discontinuous reception (discontinuous reception, DRX) cycle is configured for a terminal, the terminal does not monitor a PDCCH during a sleep period, to ensure that the terminal is in a sleep state to a maximum extent, thereby saving energy.

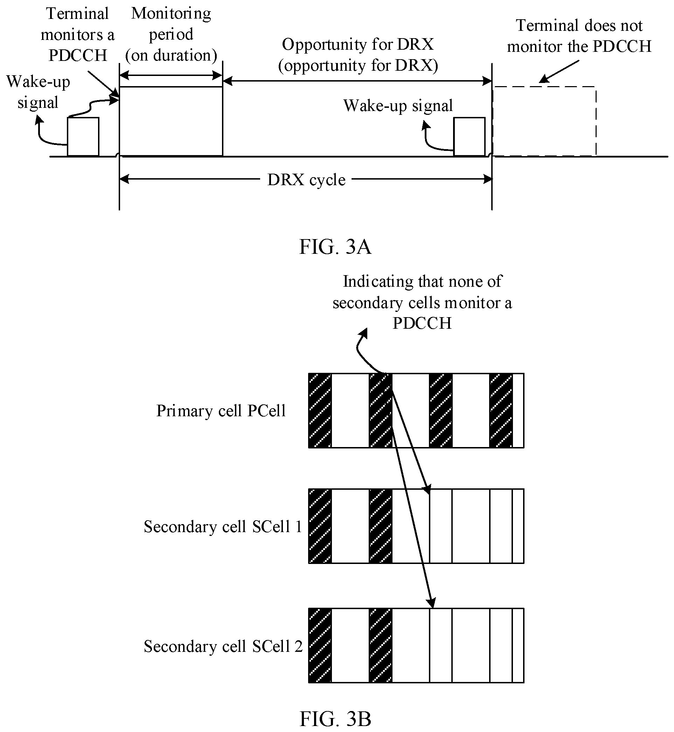

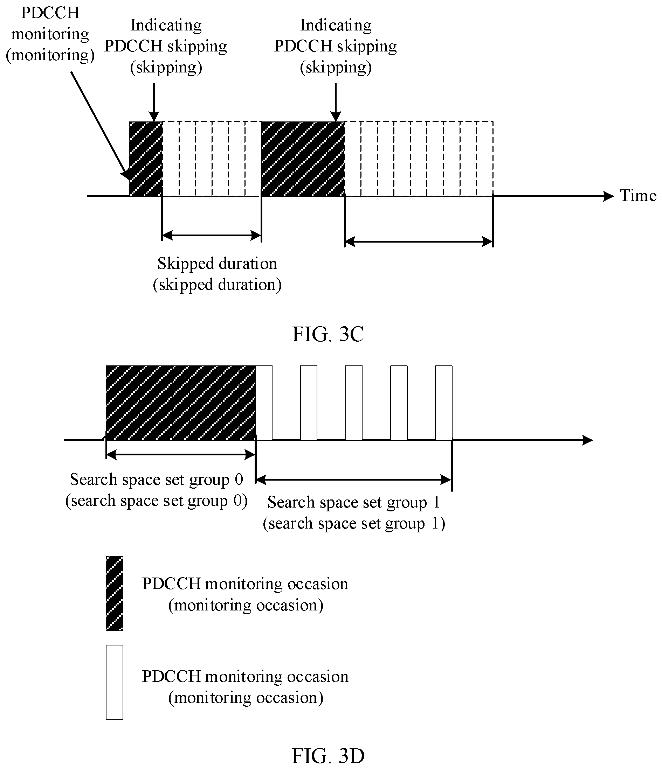

Refer to FIG. 3A. In R16, a WUS-based DRX mechanism is designed. A WUS is used to carry whether the terminal needs to be woken up when the terminal enters an active state next time. In addition, refer to FIG. 3B. For a cross-carrier scheduling scenario, which secondary cell (secondary cell, SCell) needs to activate a PDCCH blind detection function may be dynamically indicated. If not required, PDCCH monitoring for neighboring cells is disabled. In R17, PDCCH skipping (skipping) is designed to indicate that a PDCCH blind detection may be skipped in a period of time, equivalently increasing a period of the PDCCH blind detection and effectively reducing power consumption of the terminal, as shown in FIG. 3C. In addition, search space set group (Search Space Set Group, SSSG) switching (switching) is further designed, so that the terminal can switch between SSSGs in different monitoring periods as required, as shown in FIG. 3D.

In R18, the 3rd generation partnership project (3rd generation partnership project, 3GPP) conducts research on a low-power (low power, LP) wake-up signal (wake up signal, WUS) to evaluate a potential for reducing power consumption of the 5G terminal configured with the LR. Generally, even if the 5G terminal neither sends nor receives any data, power consumption of tens of milliwatts is consumed, which is referred to as idle power consumption. This idle power consumption is caused by the fact that the 5G terminal needs to periodically measure and detect a potential LP-WUS. The LR periodically measures and detects the LP-WUS, and the MR may be disabled when the LR is in an active state and searches for the potential LP-WUS. When detecting the LP-WUS, the LR may wake up the MR to receive and send data.

However, although the foregoing various optimization measures are introduced in NR, for the terminal in the connected state, most power consumption is still caused by the PDCCH blind detection. How to reduce power consumption of the PDCCH blind detection needs further research.

In view of this, an embodiment of this application provides a downlink control information detection method. In the method, a base station indicates a blind detection mode for downlink control information via first information. For example, the blind detection mode includes performing blind detection for the downlink control information based on a first module or performing blind detection for the downlink control information based on a second module. A terminal activates, based on the blind detection mode, the first module or the second module to perform the blind detection for the downlink control information. Based on this solution, the base station may indicate the blind detection mode for the downlink control information to the terminal, and the terminal may perform, based on the indication of the blind detection mode, the blind detection for the downlink control information based on the first module or perform the blind detection for the downlink control information based on the second module. In comparison with a related technology in which an LR wakes up an MR to perform blind detection for the downlink control information, this solution can reduce a quantity of times of waking up the MR and also avoid frequently waking up the MR, thereby saving energy.

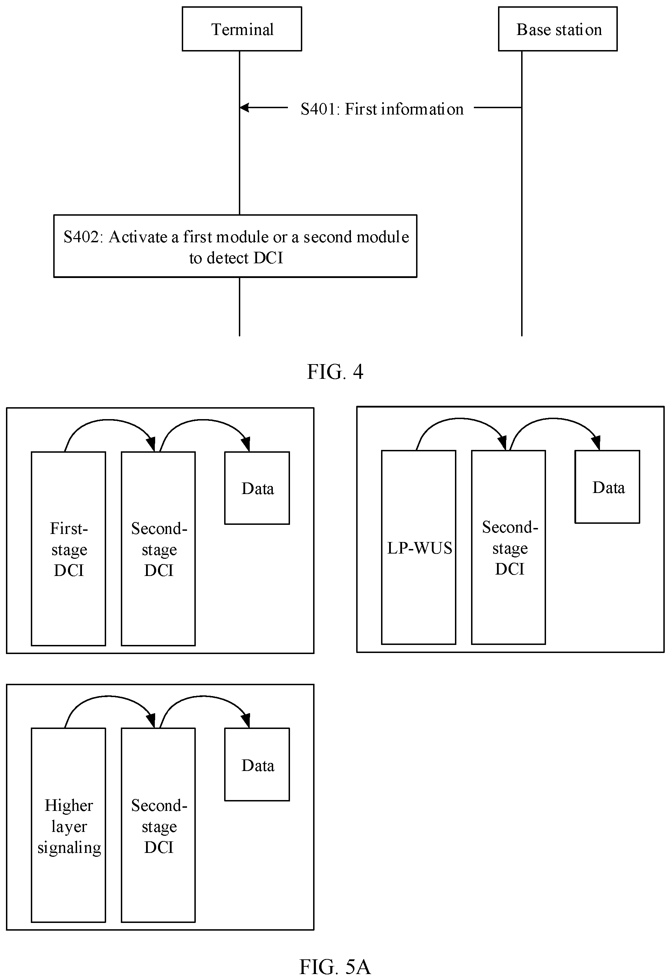

FIG. 4 is an example flowchart of the downlink control information detection method according to an embodiment of this application. The method may include the following operations. In the embodiment shown in FIG. 4, a first communication apparatus may include the first module and the second module, and power consumption of the first module is lower than power consumption of the second module. In the embodiment shown in FIG. 4, an example in which the first communication apparatus is the terminal and the second communication apparatus is the base station is used for description.

S401: The base station sends the first information to the terminal.

Correspondingly, the terminal receives the first information from the base station.

The first information may indicate the blind detection mode for the downlink control information. In this specification, the downlink control information DCI is used as an example for description. For example, the blind detection mode may include blind detection for the DCI based on the second module. For another example, the blind detection mode may include blind detection for the DCI based on the first module. Because blind detection for the DCI is performed by using the first module with low power, power consumption of the terminal can be reduced. In comparison with the blind detection for the DCI based on the second module, when the blind detection for the DCI is performed based on the first module, the first information can carry less information and use a more concise indication.

S402: The terminal activates the first module or the second module to detect the DCI.

For example, if the first information indicates that the blind detection mode for the DCI includes the blind detection for the DCI based on the second module, the terminal may activate (active), wake up (wake up), or enable the second module to perform blind detection for the DCI. For another example, if the first information indicates that the blind detection mode for the DCI includes the blind detection for the DCI based on the first module, the terminal may activate, wake up, or enable the first module to perform blind detection for the DCI.

In a possible case, the first information may be carried in a low-power wake-up signal. The following uses the low-power wake-up signal LP-WUS as an example for description. For example, the LP-WUS may include the first information, to indicate the blind detection mode for the DCI. For example, the first information may be 1-bit indication information. When a value of the first information is 0, it indicates that the blind detection mode for the DCI includes the blind detection for the DCI based on the first module; or when a value of the first information is 1, it indicates that the blind detection mode for the DCI includes the blind detection for the DCI based on the second module. Alternatively, when a value of the first information is 1, it indicates that the blind detection mode for the DCI includes the blind detection for the DCI based on the first module; or when a value of the first information is 0, it indicates that the blind detection mode for the DCI includes the blind detection for the DCI based on the second module.

In another possible case, the first information may be carried in radio resource control (radio resource control, RRC) signaling, for example, RRC connection configuration (RRC connected configuration) or RRC reconfiguration (RRC reconfiguration). This is not specifically limited in this application. For the terminal in a connected state, RRC signaling may configure the blind detection mode for the DCI, for example, performing blind detection for the DCI based on the first module or performing blind detection for the DCI based on the second module. Optionally, the RRC signaling may provide two configurations, where one configuration is a first blind detection mode, and the other configuration is a default (default) configuration. When a first condition is met, the first blind detection mode may be switched to a second blind detection mode. For example, the RRC signaling may configure the first blind detection mode as performing blind detection for the DCI is performed based on the second module. When the first condition is met, the terminal may activate the first module to perform the blind detection for the DCI based on the first module. In an example, the first condition may include that the second module does not detect the DCI within a period of time. It should be noted that the period of time may be duration, or may be implemented by slots (slots), sub-slots, or the like. For example, if the second module does not detect the DCI in N consecutive slots, the terminal may activate the first module to perform the blind detection for the DCI based on the first module.

It may be understood that the first condition may be indicated by the base station or may be predefined in a protocol. If the first condition is indicated by the base station, the first condition may be indicated by the RRC signaling.

In a possible implementation, the DCI in this embodiment of this application may be single-stage DCI. In the single-stage DCI, all DCI content is transmitted on a single control channel, for example, a PDCCH. One of the main advantages of the single-stage DCI is spectral efficiency, because cyclic redundancy check (cyclic redundancy check, CRC) overheads of a control channel may be limited to only once per data transmission. In addition, the single-stage DCI may be beneficial in terms of reliability, because once one piece of DCI is detected, data can be decoded, and the single-stage DCI is usually protected more strongly than the data.

In another possible implementation, the DCI in this embodiment of this application may be multi-stage DCI. For example, information included in one piece of DCI may be transmitted by being divided into two pieces of DCI or a plurality of pieces of DCI. If the terminal needs to change numerology (the numerology is related to subcarrier spacing and/or a cyclic prefix CP length) used for data decoding or adjust a bandwidth used for data receiving, a very short latency is expected for DCI decoding. If two-stage DCI is employed, there is a potentially smaller bandwidth on first-stage DCI and the first-stage DCI is sent at the beginning of a slot, a decoding latency of a control channel can be reduced, and a gap between control and data for bandwidth/numerology adaptation can be minimized. Second, if a resource position of the control channel is relatively fixed, or a maximum size of a resource is insufficient to meet a required capacity of the control channel, more control channel resources can accommodate the first-stage DCI by reducing a size of the first-stage DCI and placing DCI content in second-stage DCI. Optionally, the single-stage DCI and the multi-stage DCI may coexist. For example, the single-stage DCI or the multi-stage DCI may be selected for sending in different scenarios.

The following describes a method for the terminal to perform blind detection for the DCI by using the first module and the second module when the DCI in this embodiment of this application is the two-stage DCI.

In a possible case, the DCI may include second information and third information, and the second information is different from or does not overlap the third information. In this specification, the second information may be understood as the first-stage DCI, and the third information may be understood as the second-stage DCI. The first-stage DCI may be carried on a PDCCH, and the second-stage DCI and the first-stage DCI may be carried on different resources in a same PDCCH; or the second-stage DCI and the first-stage DCI may be carried on different channels, for example, carried on a PDSCH or different PDCCHs. For example, the first-stage DCI may be carried on a first PDCCH, and the second-stage DCI may be carried on a second PDCCH. For another example, the first-stage DCI may be carried on a first time-frequency resource in the first PDCCH, and the second-stage DCI may be carried on a second time-frequency resource in the first PDCCH. For another example, the first-stage DCI may be carried on the PDCCH, and the second-stage DCI may be carried on the PDSCH.

In an example, when the first-stage DCI is carried on the first PDCCH, and the second-stage DCI is carried on the second PDCCH, a resource occupied by the second-stage DCI, for example, a time domain resource and/or a time frequency resource, may be indicated by using higher layer signaling, the first-stage DCI, or the LP-WUS, as shown in FIG. 5A. It may be understood that when slot-based and mini-slot (mini-slot) scheduling are multiplexed, the first-stage DCI or the first information may indicate the resource occupied by the second-stage DCI. In other words, the first-stage DCI or the first information may indicate a resource of the second-stage DCI used for the mini-slot scheduling.

In another example, when the first-stage DCI is carried on the PDCCH, and the second-stage DCI is carried on the PDSCH, a resource occupied by the second-stage DCI, for example, a time domain resource and/or a frequency domain resource, may be predefined, or may be indicated by using the first-stage DCI or the first information. For example, a gap between the resource occupied by the second-stage DCI on the PDSCH and a resource occupied by data carried on the PDSCH may be predefined. Optionally, because the second-stage DCI is carried on the PDSCH, and the PDSCH further carries the data, a demodulation reference signal (demodulation reference signal, DMRS) used for data demodulation may also be used for demodulation of the second-stage DCI.

Optionally, the base station may indicate, via the first information, whether a DMRS configuration used by the PDCCH and the PDSCH can be shared, for example, whether a quasi co-location (quasi co-location, QCL) relationship and a channel measurement result can be shared. If the first information indicates that the DMRS configuration used by the PDCCH and the PDSCH can be shared, a same DMRS configuration may be used when demodulating the first-stage DCI, the second-stage DCI, and the data. The DMRS configuration may be indicated by the RRC signaling.

The following describes a manner in which the resource occupied by the second-stage DCI is indicated by the first information. The first information may indicate one or more of a time domain resource or a frequency domain resource occupied by the second-stage DCI.

In a possible case, the first information may indicate the frequency domain resource of the second-stage DCI via a resource block group (resource block group, RBG). A larger RBG size (size) may be configured to reduce bit overheads of the RBG. The following is described with reference to Table 1.

**Table 1: Example of an RBG**

| BWP size (size) | Configuration 1 | Configuration 2 | Configuration 3 |
|---|---|---|---|
| 1 to 36 | 2 | 4 | 8 |
| 37 to 72 | 4 | 8 | 16 |
| 73 to 144 | 8 | 16 | 32 |
| 145 to 275 | 16 | 16 | 32 |

Table 1 shows an example of an RBG in a related technology. When the BWP size is 1 to 36, the configuration 1 may indicate that an RBG size is 2 RBs. In this case, when the bandwidth part (bandwidth part, BWP) size is 1 to 36, there are a maximum of 18 RBGs. In other words, 18 bits are required to indicate a BWP bandwidth. For example, an indication may be "100000000000000000" to indicate that 2 RBs are activated for communication. Similarly, when the BWP size is 37 to 72, the configuration 1 may indicate that the RBG size is 4 RBs. In this case, there are a maximum of 18 RBGs in the BWP. In other words, 18 bits are required to indicate the BWP bandwidth. For example, an indication may be "100000000000000000" to indicate that 4 RBs are activated for communication. The rest may be deduced by analogy.

Refer to Table 2. In this embodiment of this application, a larger RBG size may be defined. In other words, one RBG may include a larger quantity of RBs, so that fewer RBGs are included in the BWP, thereby reducing the bit overheads of the RBG.

**Table 2: Example of an RBG**

| BWP size (size) | Configuration X |
|---|---|
| 1 to 36 | 16 |
| 37 to 72 | 16 |
| 73 to 144 | 32 |
| 145 to 275 | 64 |

In Table 2, when the BWP size is 1 to 36, the configuration X may indicate that an RBG size is 16 RBs. In this case, there are a maximum of 3 RBGs in the BWP, and 3 bits are required to indicate a BWP bandwidth. For example, an indication may be "100" to indicate that first 16 RBs are activated for communication. Optionally, if the first information indicates the frequency domain resource occupied by the second-stage DCI on the PDSCH, the configuration X may be used by default to indicate the frequency domain resource.

In another possible case, the time domain resource occupied by the second-stage DCI may be predefined. For example, the second-stage DCI is sent by default in N1 slots (slots) after a slot occupied by the first information, a time domain start symbol is M1, and one, two, or more symbols are occupied. Alternatively, the time domain resource occupied by the second-stage DCI may be indicated by the first information. For example, the first information may indicate that the second-stage DCI is sent in N2 slots after a slot occupied by the first information, a time domain start symbol is M2, and one, two, or more symbols are occupied.

In still another possible case, the first information may further indicate an MCS of the second-stage DCI. For example, when the second-stage DCI is carried via the PDSCH, an MCS table may be rows 0 to 15 of a table for the PDSCH or a physical uplink shared channel (physical uplink shared channel, PUSCH) in the related technology, and the first information may indicate a specific row to be used. For example, a specific row in the MCS table may be indicated by 4 bits. When the second-stage DCI is carried via the PDSCH, a used MCS table may be a newly added table, or an MCS table of the PDSCH or the PUSCH may be reused. When the MCS table of the PDSCH or the PUSCH is reused, the first information may indicate only first 16 rows of the MCS table.

In a possible implementation, when the first-stage DCI is carried on the PDCCH, and the second-stage DCI is carried on the PDSCH, the first information may further indicate whether a modulation and coding scheme (modulation and coding scheme, MCS) of the second-stage DCI is shared with an MCS of data carried on the PDSCH. Different options may be selected for the MCS of the second-stage DCI and the MCS of the data carried on the PDSCH based on positions at which the second-stage DCI and the data are multiplexed on the PDSCH. For example, the second-stage DCI and the data may share a same MCS or use different MCSs. For example, the second-stage DCI may fixedly use quadrature phase shift keying (quadrature phase shift keying, QPSK). Optionally, the first information may further indicate that the second-stage DCI and the data carried on the PDSCH are separately encoded or jointly encoded.

In this embodiment of this application, a blind detection mode for the first-stage DCI may be indicated via the first information. A blind detection mode for the second-stage DCI may be indicated by the first-stage DCI, or may be indicated by the first information. This is not specifically limited in this application. If the blind detection mode for the second-stage DCI is detection based on the first module, the terminal may perform detection for the second-stage DCI by using the first module. If the blind detection mode for the second-stage DCI is detection based on the second module, the terminal may perform detection for the second-stage DCI by using the second module.

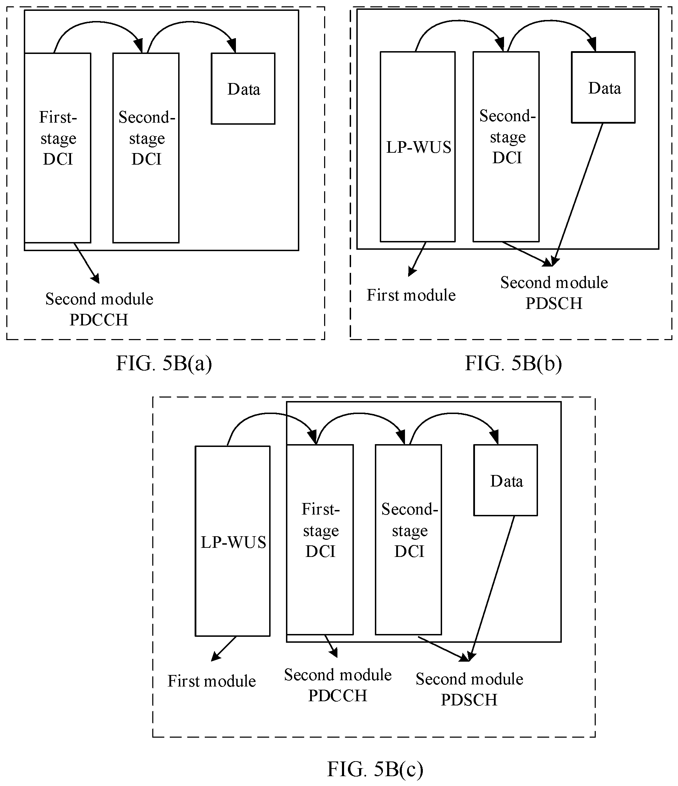

FIG. 5B(a), FIG. 5B(b), and FIG. 5B(c) are a diagram of a blind detection mode for the DCI. It can be learned from FIG. 5B(a) that the resource occupied by the second-stage DCI may be indicated by the first-stage DCI. The base station may indicate, via the first information, that the first-stage DCI is detected by the second module, and the first-stage DCI is carried on the PDCCH. The first information is carried in the RRC signaling. In other words, the RRC signaling indicates that the blind detection mode for the first-stage DCI includes detection based on the second module. It may be understood that the second-stage DCI may be detected by the first module or the second module, and the blind detection mode for the second-stage DCI may be indicated by the RRC signaling or the first-stage DCI. Optionally, the second-stage DCI may be carried on the PDCCH or the PDSCH, with reference to the foregoing related descriptions. Details are not described herein again.

It can be learned from FIG. 5B(b) that the resource occupied by the second-stage DCI may be indicated by the LP-WUS, for example, indicated by the first information included in the LP-WUS. The base station may indicate, via the first information, that the second-stage DCI is detected by the second module, and the second-stage DCI is carried on the PDSCH. The first information is carried in the LP-WUS. In other words, the LP-WUS indicates that the blind detection mode for the second-stage DCI includes detection based on the second module. It may be understood that the first-stage DCI may be detected by the first module or the second module, and the blind detection mode for the first-stage DCI may be indicated by the LP-WUS or the RRC signaling. Optionally, the first-stage DCI may be carried on the PDCCH.

It can be learned from FIG. 5B(c) that the resource occupied by the second-stage DCI may be indicated by the first-stage DCI. The base station may indicate, via the first information, that the first-stage DCI is detected by the second module, and the second-stage DCI is detected by the second module. The first-stage DCI is carried on the PDCCH, and the second-stage DCI is carried on the PDSCH. The first information is carried in the LP-WUS. In other words, the LP-WUS indicates that the blind detection mode for the first-stage DCI includes detection based on the second module, and the blind detection mode for the second-stage DCI includes detection based on the second module.

In this embodiment of this application, the first information may further indicate other information to assist in reducing blind detection complexity. The DCI in the following descriptions may be replaced with the first-stage DCI and/or the second-stage DCI.

For example, the first information may indicate presence or absence of the DCI. In other words, the first information may indicate whether the DCI exists. For example, the first information may include 1-bit information indicating the presence or the absence of the DCI. For example, when a value of the 1-bit indication information is 0, it may indicate that there is no DCI, or when a value of the 1-bit indication information is 1, it may indicate that there is the DCI. Alternatively, when a value of the 1-bit indication information is 1, it may indicate that there is no DCI, or when a value of the 1-bit indication information is 0, it may indicate that there is the DCI. When the first information indicates that there is the DCI, the terminal may perform detection for the DCI in a blind detection mode indicated by the first information.

For another example, if the first information indicates that there is the DCI, the first information may further indicate that the DCI is an uplink-scheduling DCI or the DCI is a downlink-scheduling DCI. For example, the first information may include 1-bit indication information indicating that the DCI is the uplink-scheduling DCI or the DCI is the downlink-scheduling DCI. For example, when a value of the 1-bit indication information is 0, it may indicate that the DCI is the uplink-scheduling DCI, or when a value of the 1-bit indication information is 1, it may indicate that the DCI is the downlink-scheduling DCI. Alternatively, when a value of the 1-bit indication information is 1, it may indicate that the DCI is the uplink-scheduling DCI, or when a value of the 1-bit indication information is 0, it may indicate that the DCI is the downlink-scheduling DCI.

Optionally, the first information may jointly indicate, via second indication information, the presence or the absence of the DCI and that the DCI is the uplink-scheduling DCI or the DCI is the downlink-scheduling DCI. The following is described with reference to Table 3.

**Table 3: Example of second indication information**

| Second indication information | Content |
|---|---|
| 00 | No DCI (no DCI) |
| 01 | Downlink DCI (DL DCI) |
| 10 | Uplink DCI (UL DCI) |
| 11 | Downlink DCI and uplink DCI (DL DCI and UL DCI) |

In Table 3, when a value of the second indication information is 00, it may indicate that there is no DCI, or when a value of the second indication information is 01, it may indicate that there is DCI and the DCI is the downlink DCI. The rest may be deduced by analogy. It may be understood that Table 3 is described by using an example in which the second indication information is 2 bits. A person skilled in the art may set the second indication information to 3 bits, 4 bits, or more bits as required. This is not specifically limited in this application. In addition, a correspondence between the value of the second indication information and content is merely shown as an example, and is not intended to limit the correspondence between the value of the second indication information and the indicated content. The second indication information may indicate the presence or the absence of the DCI and indicate that the DCI is the uplink-scheduling DCI and/or the DCI is the downlink-scheduling DCI.

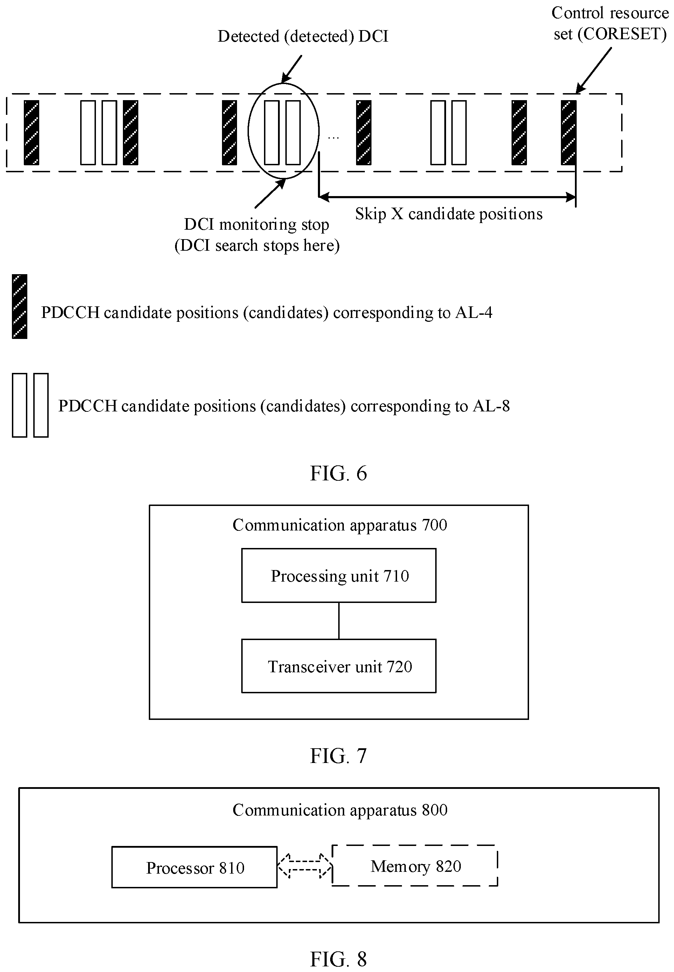

For another example, in this embodiment of this application, DCI skipping (skipping) is further supported. Refer to FIG. 6. The first information may further indicate first duration, and the first duration may be understood as duration that needs to be skipped during DCI detection. In other words, the first information may further indicate DCI skipping duration (duration). It may be understood that the first duration may be a period of duration, or may be implemented by slots or sub-slots.

In this embodiment of this application, in a carrier aggregation (carrier component, CA) scenario, the first information may further indicate whether there is cross-carrier scheduling DCI. For example, the first information may include third indication information, and the third indication information may indicate whether there is the cross-carrier scheduling DCI. For example, the third indication information may be 1-bit indication information. When a value of the 1-bit indication information is 0, it indicates that there is no cross-carrier scheduling DCI; or when a value of the 1-bit indication information is 1, it indicates that there is the cross-carrier scheduling DCI. Alternatively, when a value of the 1-bit indication information is 1, it indicates that there is no cross-carrier scheduling DCI; or when a value of the 1-bit indication information is 0, it indicates that there is the cross-carrier scheduling DCI.

In an example, when the first information indicates that there is the DCI, the first information may further indicate candidate information of the DCI, for example, a detection position of the DCI. In a possible case, the first information may indicate an aggregation level. For example, if the first information indicates that the aggregation level is a first aggregation level, the terminal performs blind detection at a candidate position corresponding to the first aggregation level. For example, if the first aggregation level is an aggregation level (aggregated level, AL) -2, and AL-2 corresponds to six candidate positions, the terminal may perform blind detection for the DCI at the six candidate positions corresponding to AL-2. It may be understood that the candidate position in this embodiment of this application may also be replaced with a detection position.

In another possible case, the first information may indicate an aggregation level range. For example, aggregation levels may be grouped, and the first information may indicate an aggregation level group. For example, assuming that AL-1 and AL-2 are aggregation level group 1, and AL-4 and AL-8 are aggregation level group 2, the first information may indicate the aggregation level group 1 or the aggregation level group 2. In this case, the terminal may perform blind detection for the DCI at a candidate position corresponding to an aggregation level included in the aggregation level group indicated by the first information. For example, if the first information indicates the aggregation level group 1, the terminal may perform blind detection for the DCI at a candidate position corresponding to AL-1 and a candidate position corresponding to AL-2.

In still another possible case, the first information may indicate an aggregation level and a target detection position, and the target detection position may be a part or all of a detection position corresponding to the aggregation level indicated by the first information. For example, the first information may indicate AL2 and an index of the target detection position. Assuming that the index is 5, the terminal may perform blind detection for the DCI at a fifth candidate position in six candidate positions corresponding to AL-2. It may be understood that the first information may also indicate the target detection position via a bitmap. For example, if the first information indicates AL2 and "000010", it may be considered that the target detection position is the fifth candidate position. Therefore, the terminal may perform blind detection for the DCI at the fifth candidate position in a candidate position corresponding to AL2.

A communication apparatus provided in this embodiment of this application is described based on the following embodiment. FIG. 7 is a block diagram of a communication apparatus 700 according to an embodiment of this application. The communication apparatus 700 may correspondingly implement functions or steps implemented by a terminal or a base station in the foregoing method embodiments. The communication apparatus may include a processing unit 710 and a transceiver unit 720. Optionally, a storage unit may be further included. The storage unit may be configured to store instructions (code or a program) and/or data. The processing unit 710 and the transceiver unit 720 may be coupled to the storage unit. For example, the processing unit 710 may read the instructions (the code or the program) and/or the data in the storage unit, to implement a corresponding method. The foregoing units may be independently disposed, or may be partially or completely integrated.

Optionally, the transceiver unit 720 may include a sending unit and a receiving unit. The sending unit may be configured to perform all sending operations performed by the communication apparatus 700, and the receiving unit may be configured to perform all receiving operations performed by the communication apparatus 700.

In some possible implementations, the communication apparatus 700 can correspondingly implement behaviors and functions of the terminal and the like in the foregoing method embodiments. For example, the communication apparatus 700 may be the terminal, or may be a component (for example, a chip or a circuit) used in the terminal. The transceiver unit 720 may be configured to perform all receiving or sending operations performed by the terminal in the embodiment shown in FIG. 4. For example, S401 in the embodiment shown in FIG. 4, and/or another process used to support the technology described in this specification. The processing unit 710 is configured to perform all operations other than the receiving and sending operations performed by the terminal in the embodiment shown in FIG. 4.

For example, the transceiver unit 720 is configured to receive first information. The first information indicates a blind detection mode for downlink control information, and the blind detection mode includes performing blind detection for the downlink control information by using a first module included in the communication apparatus or performing blind detection for the downlink control information by using a second module included in the communication apparatus. The processing unit 710 is configured to activate, based on the blind detection mode, the first module or the second module to detect the downlink control information.

In some possible implementations, the communication apparatus 700 can correspondingly implement a behavior and the function of the base station in the foregoing method embodiments. For example, the communication apparatus 700 may be the base station, or may be a component (for example, a chip or a circuit) used in the base station. The transceiver unit 720 may be configured to perform all receiving or sending operations performed by the base station in the embodiment shown in FIG. 4. For example, S401 in the embodiment shown in FIG. 4, and/or another process used to support the technology described in this specification. The processing unit 710 is configured to perform all operations other than the receiving and sending operations performed by the base station in the embodiment shown in FIG. 4.

For example, the processing unit 710 is configured to determine first information. The first information indicates a blind detection mode for downlink control information, and the blind detection mode includes performing blind detection for the downlink control information by using a first module of the communication apparatus or performing blind detection for the downlink control information by using a second module of the communication apparatus. The transceiver unit 720 is configured to send the first information to the communication apparatus.

For operations performed by the processing unit 710 and the transceiver unit 720, refer to the related descriptions in the foregoing method embodiments.

It should be understood that the processing unit 710 in embodiments of this application may be implemented by a processor or a processor-related circuit component, and the transceiver unit 720 may be implemented by a transceiver, a transceiver-related circuit component, or a communication interface.

Based on a same concept, as shown in FIG. 8, an embodiment of this application provides a communication apparatus 800. The communication apparatus 800 includes a processor 810. Optionally, the communication apparatus 800 may further include a memory 820, configured to store instructions executed by the processor 810, store input data required by the processor 810 to execute instructions, or store data generated after the processor 810 executes instructions. The processor 810 may implement the methods shown in the foregoing method embodiments by using the instructions stored in the memory 820.

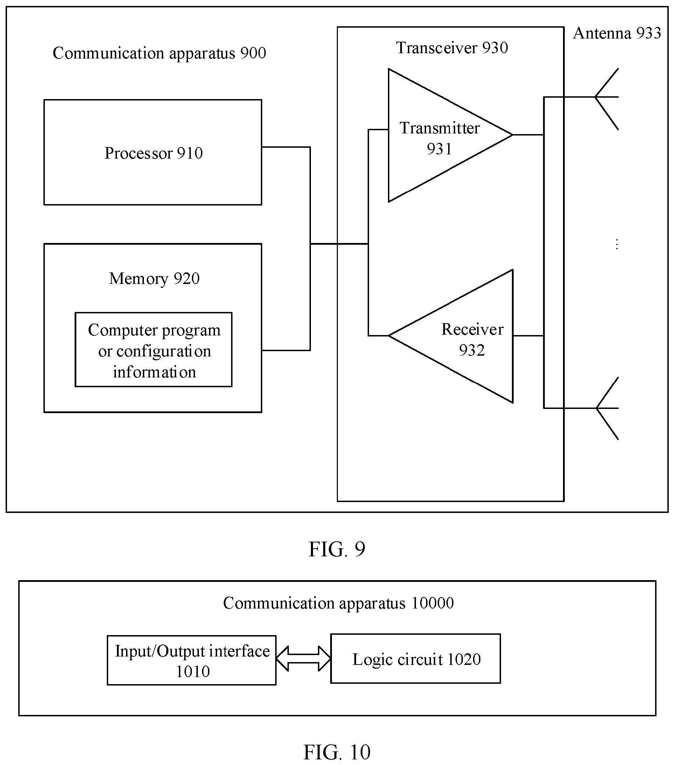

Based on a same concept, as shown in FIG. 9, an embodiment of this application provides a communication apparatus 900. The communication apparatus 900 may be a chip or a chip system. Optionally, in this embodiment of this application, the chip system may include a chip, or may include a chip and another discrete component.

The communication apparatus 900 may include at least one processor 910. The processor 910 is coupled to a memory. Optionally, the memory may be located inside the apparatus, or may be located outside the apparatus. For example, the communication apparatus 900 may further include at least one memory 920. The memory 920 stores a computer program, configuration information, a computer program or instructions, and/or data necessary for implementing any one of the foregoing embodiments. The processor 910 may execute the computer program stored in the memory 920, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 910 may collaboratively operate with the memory 920. In this embodiment of this application, a specific connection medium between a transceiver 930, the processor 910, and the memory 920 is not limited.

The communication apparatus 900 may further include the transceiver 930, and the communication apparatus 900 may exchange information with another device through the transceiver 930. The transceiver 930 may be a circuit, a bus, a transceiver, or any other apparatus that may be configured to exchange information, or is referred to as a signal transceiver unit. As shown in FIG. 9, the transceiver 930 includes a transmitter 931, a receiver 932, and an antenna 933. In addition, when the communication apparatus 900 is a chip-type apparatus or a circuit, the transceiver in the communication apparatus 900 may alternatively be an input/output circuit and/or a communication interface, and may input data (or referred to as receiving data) and output data (or referred to as sending data). The processor is an integrated processor, a microprocessor, or an integrated circuit, and the processor may determine output data based on input data.

In a possible implementation, the communication apparatus 900 may be used in a terminal. Specifically, the communication apparatus 900 may be a terminal, or may be an apparatus that can support a terminal in implementing a function of the terminal in any one of the foregoing embodiments. The memory 920 stores a computer program, a computer program or instructions, and/or data necessary for implementing functions of the communication apparatus in any one of the foregoing embodiments. The processor 910 may execute the computer program stored in the memory 920, to complete the method performed by the terminal in any one of the foregoing embodiments.

In a possible implementation, the communication apparatus 900 may be used in a base station. Specifically, the communication apparatus 900 may be a base station, or may be an apparatus that can support a base station in implementing a function of the base station in any one of the foregoing embodiments. The memory 920 stores a computer program, a computer program or instructions, and/or data necessary for implementing the function of the base station in any one of the foregoing embodiments. The processor 910 may execute the computer program stored in the memory 920, to complete the method performed by the base station in any one of the foregoing embodiments.

The communication apparatus 900 provided in this embodiment may be used in the terminal to complete the method performed by the terminal, or may be used in the base station to complete the method performed by the base station. Therefore, for technical effects that can be achieved by this embodiment, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logic block diagrams disclosed in embodiments of this application. The general-purpose processor may be a microprocessor or any conventional processor or the like. The steps in the method disclosed with reference to embodiments of this application may be directly performed and completed by a hardware processor, or may be performed and completed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be used to carry or store expected program code in a form of instructions or a data structure and that can be accessed by a computer. This is not limited thereto. The memory in this embodiment of this application may alternatively be a circuit or any other apparatus that can implement a storage function, and is configured to store a computer program, a computer program or instructions, and/or data.

Based on the foregoing embodiments, refer to FIG. 10. An embodiment of this application further provides another communication apparatus 10000, including an input/output interface 1010 and a logic circuit 1020. The input/output interface 1010 is configured to receive code instructions and transmit the code instructions to the logic circuit 1020. The logic circuit 1020 is configured to execute the code instructions to perform the method performed by the terminal or the base station in any one of the foregoing embodiments.

Optionally, the input/output interface 1010 may be an interface on a chip, and the logic circuit 1020 may be one or more processors. Optionally, the one or more processors may be located inside the apparatus, or may be located outside the apparatus.

The following describes in detail an operation performed by the communication apparatus used in the terminal or the base station.

In an optional implementation, the communication apparatus 10000 may be used in the terminal, to perform the method performed by the terminal, specifically, for example, the method performed by the terminal in the embodiment shown in FIG. 4.

For example, the input/output interface 1010 is configured to receive first information. The first information indicates a blind detection mode for downlink control information, and the blind detection mode includes performing blind detection for the downlink control information by using a first module included in the communication apparatus or performing blind detection for the downlink control information by using a second module included in the communication apparatus. The logic circuit 1020 is configured to activate, based on the blind detection mode, the first module or the second module to detect the downlink control information.

The communication apparatus 10000 provided in this embodiment may be used in the terminal to complete the method performed by the terminal. Therefore, for technical effects that can be achieved by this embodiment, refer to the foregoing method embodiments. Details are not described herein again.

In an optional implementation, the communication apparatus 10000 may be used in the base station, to perform the method performed by the base station, specifically, for example, the method performed by the base station in the embodiment shown in FIG. 4.

For example, the logic circuit 1020 is configured to determine first information. The first information indicates a blind detection mode for downlink control information, and the blind detection mode includes performing blind detection for the downlink control information by using a first module of the communication apparatus or performing blind detection for the downlink control information by using a second module of the communication apparatus. The input/output interface 1010 is configured to send the first information to the communication apparatus.

The communication apparatus 10000 provided in this embodiment may be used in the base station to complete the method performed by the base station. Therefore, for technical effects that can be achieved by this embodiment, refer to the foregoing method embodiments. Details are not described herein again.

Based on the foregoing embodiments, an embodiment of this application further provides a communication system. The communication system includes at least one communication apparatus used in a terminal and at least one communication apparatus used in a base station. For technical effects that can be achieved, refer to the foregoing method embodiments. Details are not described herein again.

Based on the foregoing embodiments, an embodiment of this application further provides a system. The communication system includes at least one base station and a terminal.

Based on the foregoing embodiments, an embodiment of this application further provides a computer-readable storage medium. The computer-readable storage medium stores a computer program or instructions. When the instructions are executed, the method performed by the terminal in any one of the foregoing embodiments is implemented, or the method performed by the base station in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement functions of communication apparatuses in FIG. 7 to FIG. 10, an embodiment of this application further provides a chip, including a processor, configured to support the communication apparatus in implementing functions of the terminal or the base station in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of the embodiments of this application provided that they fall within the scope of protection defined by the following claims and their equivalent technologies.

## Claims

1. A downlink control information detection method, applied to a communication apparatus, wherein the communication apparatus comprises a first module and a second module, power consumption of the first module is lower than power consumption of the second module, and the method comprises:
receiving first information, wherein the first information indicates a blind detection mode for downlink control information, and the blind detection mode comprises blind detection for the downlink control information by using the first module or blind detection for the downlink control information by using the second module; and
activating, based on the blind detection mode, the first module or the second module to detect the downlink control information.

2. The method according to claim 1, wherein the first information is carried in a low-power wake-up signal, or the first information is carried in radio resource control signaling.

3. The method according to claim 1 or 2, further comprising:
the first information indicates to perform the blind detection for the downlink control information by using the second module; and
the first information further comprises a first condition, and the first condition is used to switch from the blind detection for the downlink control information by using the second module to the blind detection for the downlink control information by using the first module.

4. The method according to any one of claims 1 to 3, wherein the downlink control information comprises second information and third information, the first information indicates a blind detection mode for the second information, and the second information and the third information do not overlap; and
detecting the downlink control information based on the blind detection mode comprises:
detecting the second information based on the blind detection mode.

5. The method according to claim 4, wherein the second information further comprises one or more of the following:
a time-frequency resource of the third information or a modulation and coding scheme of the third information.

6. The method according to claim 4 or 5, wherein the second information is carried on a first downlink control channel, and the third information is carried on a second downlink control channel; or the second information is carried on a downlink control channel, and the third information is carried on a downlink data channel.

7. The method according to any one of claims 1 to 6, wherein the first information further indicates whether the downlink control information exists, and detecting the downlink control information based on the blind detection mode comprises:
when the first information indicates that the downlink control information exists, detecting the downlink control information based on the blind detection mode.

8. The method according to any one of claims 1 to 7, wherein the first information further indicates that the downlink control information schedules uplink transmission and/or the downlink control information schedules downlink transmission.

9. The method according to any one of claims 1 to 8, wherein the first information further indicates first duration, and the first duration is duration that needs to be skipped during detection of the downlink control information.

10. The method according to any one of claims 1 to 9, wherein the first information further indicates whether the downlink control information is cross-carrier scheduling downlink control information.

11. The method according to any one of claims 1 to 10, wherein the first information further indicates an aggregation level or an aggregation level group, and the aggregation level group comprises one or more aggregation levels; and
detecting the downlink control information based on the blind detection mode comprises:
detecting the downlink control information at a detection position corresponding to the aggregation level or at a detection position corresponding to the aggregation level group.

12. The method according to any one of claims 1 to 10, wherein the first information further indicates an aggregation level and a target detection position, and the target detection position is a part or all of a detection position corresponding to the aggregation level indicated by the first information; and
detecting the downlink control information based on the blind detection mode comprises:
detecting the downlink control information at the target detection position based on the blind detection mode.

13. A downlink control information detection method, comprising:
determining first information, wherein the first information indicates a blind detection mode for downlink control information, and the blind detection mode comprises blind detection for the downlink control information by using a first module of a communication apparatus or blind detection for the downlink control information by using a second module of a communication apparatus; and
sending the first information to the communication apparatus.

14. The method according to claim 13, wherein the first information is carried in a low-power wake-up signal, or the first information is carried in radio resource control signaling.

15. The method according to claim 13 or 14, wherein the first information further comprises a first condition, and the first condition indicates to switch from the blind detection for the downlink control information by using the second module to the blind detection for the downlink control information based on the first module.

16. The method according to any one of claims 13 to 15, wherein the downlink control information comprises second information and third information, the first information indicates a blind detection mode for the second information, and the second information and the third information do not overlap; and
that the first information indicates the blind detection mode for the downlink control information comprises:
the first information indicates the blind detection mode for the second information.

17. The method according to claim 16, wherein the second information further comprises one or more of the following:
a time-frequency resource of the third information or a modulation and coding scheme of the third information.

18. The method according to claim 16 or 17, wherein the second information is carried on a first downlink control channel, and the third information is carried on a second downlink control channel; or the second information is carried on a downlink control channel, and the third information is carried on a downlink data channel.

19. The method according to any one of claims 13 to 18, wherein the first information further indicates whether the downlink control information exists.

20. The method according to any one of claims 13 to 19, wherein the first information further indicates that the downlink control information schedules uplink transmission and/or the downlink control information schedules downlink transmission.

21. The method according to any one of claims 13 to 20, wherein the first information further indicates first duration, and the first duration is duration that needs to be skipped during detection of the downlink control information.

22. The method according to any one of claims 13 to 21, wherein the first information further indicates whether the downlink control information is cross-carrier scheduling downlink control information.

23. The method according to any one of claims 13 to 22, wherein the first information further indicates an aggregation level or an aggregation level group, the aggregation level group comprises one or more aggregation levels, and the aggregation level corresponds to a detection position of the downlink control information, or the aggregation level group corresponds to a detection position of the downlink control information.

24. The method according to any one of claims 13 to 23, wherein the first information further indicates an aggregation level and a target detection position, and the target detection position is a part or all of a detection position corresponding to the aggregation level indicated by the first information.

25. A communication apparatus, comprising a unit configured to perform the method according to any one of claims 1 to 12, or comprising a unit configured to perform the method according to any one of claims 13 to 24.

26. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 12, or the electronic apparatus is enabled to perform the method according to any one of claims 13 to 24.

27. A communication system, comprising an apparatus configured to perform the method according to any one of claims 1 to 12 and an apparatus configured to perform the method according to any one of claims 13 to 24.

28. A chip system, wherein the chip system comprises:
a communication interface; and
a processor, configured to invoke and run the instructions through the communication interface, to enable a device on which the chip system is installed to perform the method according to any one of claims 1 to 12, or to enable a device on which the chip system is installed to perform the method according to any one of claims 13 to 24.
